Europäisches Patentamt

European Patent Office

Office européen des brevets

(19)

(11) **EP 1 647 903 A1**

(12) **EUROPEAN PATENT APPLICATION**

(43) Date of publication:
**19.04.2006 Bulletin 2006/16**

(51) Int Cl.:
*G06F 17/30* (2006.01)

(21) Application number: **05108702.1**

(22) Date of filing: **21.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **05.10.2004 US 958560**

(71) Applicant: **Microsoft Corporation Redmond WA 98052 (US)**

(72) Inventors:
• **Horvitz, Eric J.**
  **Redmond,WA 98052 (US)**
• **Teevan, Jaime Brooks**
  **Redmond, WA 98052 (US)**
• **Dumais, Susan T.**
  **Redmond, WA 98052 (US)**

(74) Representative: **Grünecker, Kinkeldey, Stockmair & Schwanhäusser Anwaltssozietät Maximilianstrasse 58 80538 München (DE)**

(54) **Systems and methods for providing personalisation by means of search query and result refinement**

(57)    The present invention relates to systems and methods that employ user models to personalize generalized queries and/or search results according to information that is relevant to respective user characteristics. A system is provided that facilitates generating personalized searches of information. The system includes a user model to determine characteristics of a user. The user model may be assembled automatically via an analysis of a user's content, activities, and overall context. A personalization component automatically modifies queries and/or search results in view of the user model in order to personalize information searches for the user. A user interface receives the queries and displays the search results from one or more local and/or remote search engines, wherein the interface can be adjusted in a range from more personalized searches to more generalized searches.

FIG. 1

**Description**

TECHNICAL FIELD

The present invention relates generally to computer systems and more particularly, the present invention relates to automatically refining and focusing search queries and/or results in accordance with a personalized user model.

BACKGROUND OF THE INVENTION

Given the vast popularity of the World Wide Web and the Internet, users can acquire information relating to almost any topic from a large quantity of information sources. In order to find information, users generally apply various search engines to the task of information retrieval. Search engines allow users to find Web pages containing information or other material on the Internet that contain specific words or phrases. For instance, if they want to find information about George Washington, the first president of the United States, they can type in "George Washington first president", click on a search button, and the search engine will return a list of Web pages that contain information about this famous president. If a more generalized search were conducted however, such as merely typing in the term "Washington," many more results would be returned such as relating to geographic regions or institutions associated with the same name.
There are many search engines on the Web. For instance, AllTheWeb, AskJeeves, Google, HotBot, Lycos, MSN Search, Teoma, Yahoo are just a few of many examples. Most of these engines provide at least two modes of searching for information such as via their own catalog of sites that are organized by topic for users to browse through, or by performing a keyword search that is entered via a user interface portal at the browser. In general, a keyword search will find, to the best of a computer's ability, all the Web sites that have any information in them related to any key words and phrases that are specified. A search engine site will have a box for users to enter keywords into and a button to press to start the search. Many search engines have tips about how to use keywords to search effectively. The tips are usually provided to help users more narrowly define search terms in order that extraneous or unrelated information is not returned to clutter the information retrieval process. Thus, manual narrowing of terms saves users a lot of time by helping to mitigate receiving several thousand sites to sort through when looking for specific information.
One problem with all searching techniques is the requirement of manual focusing or narrowing of search terms in order to generate desired results in a short amount of time. Another problem is that search engines operate the same for all users regardless of different user needs and circumstances. Thus, if two users enter the same search query they get the same results, regardless of their interests, previous search history, computing context, or environmental context (*e.g.*, location, machine being used, time of day, day of week). Unfortunately, modem searching processes are designed for receiving explicit commands with respect to searches rather than considering these other personalized factors that could offer insight into the user's actual or desired information retrieval goals.

SUMMARY OF THE INVENTION

The following presents a simplified summary of the invention in order to provide a basic understanding of some aspects of the invention. This summary is not an extensive overview of the invention. It is not intended to identify key/ critical elements of the invention or to delineate the scope of the invention. Its sole purpose is to present some concepts of the invention in a simplified form as a prelude to the more detailed description that is presented later.
The present invention relates to systems and methods that enhance information retrieval methods by employing user models that facilitate personalizing information searches to a user's characteristics by considering how the information pertains or is most relevant to respective users. The models can be combined with traditional search algorithms to modify search queries and/or modify search results in order to automatically focus information retrieval methods to items or results that are more likely to be relevant to the user in view of the user's personal characteristics. Various techniques are provided for personalizing searches via the model by considering such aspects as the user's content (*e.g.*, information stored on the user's computer), interests, expertise, and the specific context in which their information need (*e.g.*, search query, computing events) arises to improve the user's search experience. This improvement can be observed by providing users with more focused or filtered searches for items of interest, removing unrelated items, and/or re-ranking returned search results in terms of personalized preferences of the user.
The user models can be derived from a plurality of sources including rich indexes that consider past user events, previous client interactions, search or history logs, user profiles, demographic data, and/or based upon similarities to other users (*e.g.*, collaborative filtering). Also, other techniques such as machine learning can be applied to monitor user behavior over time to determine and/or refine the user models. The models can be combined with offline or online search methods (or combinations thereof) to modify search results to produce information retrieval outcomes that are most likely to be of interest to the respective user. Thus, the user models are employed to differentiate personalized searches from generalized searches in an automatic and efficient manner.

In one specific example, a generalized search may include the term "weather." Since the model can determine that the user is from a particular city (*e.g.*, from an e-mail account, saved documents listing the user's address, or by explicit or implicit specification of location), a personalized search can be automatically created (*e.g.*, via automatic query and/or results modification) that returns weather related information relating to the user's current city. In a mobile situation, the context for the search may be different and thus the query and or results can be modified accordingly (*e.g.*, search conducted from user's mobile computer with current context detected as being out of town from recent airline reservation or from a recent Instant Message with a friend). User interfaces can be provided that return personalized results and enable tuning of the personalized search algorithms from more generalized searching across a spectrum toward more personalized searching.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

BRIEF DESCRIPTION OF THE DRAWINGS

Fig. 1 is a schematic block diagram illustrating an information retrieval architecture in accordance with an aspect of the present invention.

Fig. 2 is a block diagram illustrating a user model in accordance with an aspect of the present invention.

Fig. 3 is a flow diagram illustrating an information retrieval process in accordance with an aspect of the present invention.

Fig. 4-9 illustrate example user interfaces in accordance with an aspect of the present invention.

Figs. 10-13 illustrate an example personalization algorithm in accordance with an aspect of the present invention.

Fig. 14 is a schematic block diagram illustrating a suitable operating environment in accordance with an aspect of the present invention.

Fig. 15 is a schematic block diagram of a sample-computing environment with which the present invention can interact.

DETAILED DESCRIPTION OF THE INVENTION

The present invention relates to systems and methods that employ user models to personalize generalized queries and/or search results according to information that is relevant to a respective user. In one aspect, a system is provided that facilitates generating personalized searches of information. The system includes a user model to determine characteristics of a user. A personalization component automatically modifies queries and/or search results in view of the user model in order to personalize information searches for the user. A user interface component receives the queries and displays the search results from one or more local and/or remote search engines, wherein the interface can be adjusted in a range from more personalized searches to more generalized searches.

As used in this application, the terms "component," "service," "model," and "system" are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example.

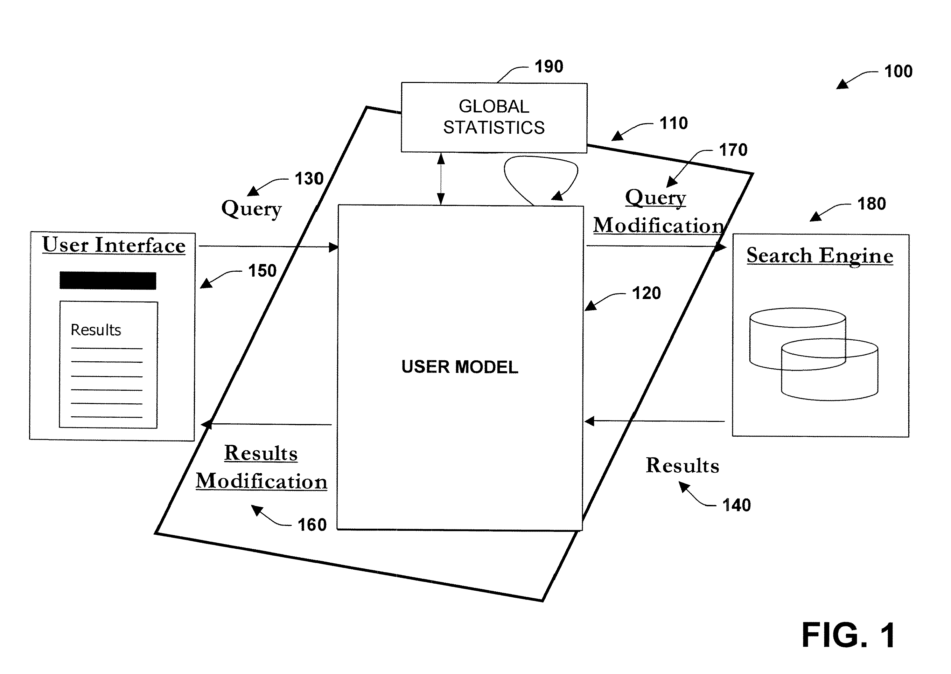

Referring initially to Fig. 1, a system 100 illustrates an information retrieval architecture in accordance with an aspect of the present invention. The system 100 depicts a general diagram for personalizing search results. A personalization component 110 includes a user model 120 as well as processing components (*e.g.*, retrieval algorithms modified in accordance with the user model) for using the model to influence search results by modifying a query 130 and/or modifying results 140 returned from a search. A user interface 150 generates the query 130 and receives modified or personalized results based upon a query modification 170 and/or results modification 160 provided by the personalization component 110. As utilized herein, the term "query modification" refers to both an alteration with respect to terms in the query 130 and alterations in an algorithm that matches the query 130 to documents in order to obtain the personalized results 140. Modified queries and/or results 140 are returned from one or more local and/or remote search engines 180. A global database 190 of user statistics may be maintained to facilitate updates to the user model 120.

Generally, there are at least two approaches to adapting search results based on the user model 120. In one aspect, query modification processes an initial input query and modifies or regenerates the query (via user model) to yield personalized results. Relevance feedback described below is a two-cycle variation of this process, wherein a query generates results that leads to a modified query (using explicit or implicit judgments about the initial results set) which yields personalized results that are personalized to a short-term model based on the query and result set. Longer-term user models can also be used in the context of relevance feedback. Further, as discussed above, query modifications also refer to alterations made in algorithm(s) employed to match the query to documents. In another aspect, results modification take a user's input as-is to generate a query to yield results which are then modified (via user model) to generate personalized results. It is noted that modification of results usually includes some form of re-ranking and/or selection from a larger set of alternatives. Modification of results can also include various types of agglomeration and summarization of all or a subset of results.

Methods for modifying results include statistical similarity match (in which users interests and content are represented as vectors and matched to items), and category matching (in which the users' interests and content are represented and matched to items using a smaller set of descriptors). The above processes of query modification or results modification can be combined, either independently, or in an integrated process where dependencies are introduced among the two processes and leveraged. To illustrate personalized searching, the following examples are provided.

In one example, a searcher is located in Seattle. A search for traffic information returns information regarding Seattle traffic, rather than traffic in general. Or, a search for pizza returns only pizza restaurants in the appropriate zip codes relating to the user.

In another example, a searcher has previously searched for the term Porsche. A search for Jaguar returns results related to the car meaning of Jaguar as opposed to an animal or computer game or watch; other results may also be returned but preference is given to those relating to the car meaning.

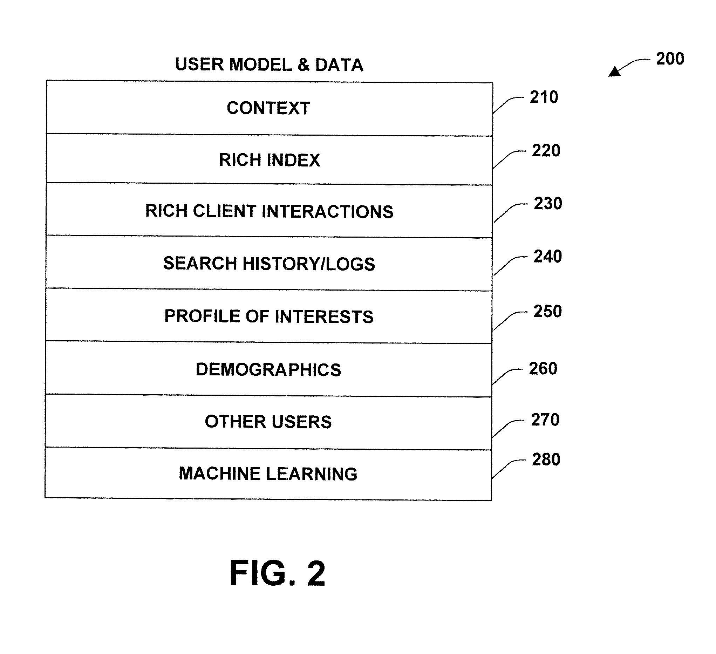

In another case, a searcher looks for "Bush" and most results are about the president. However, this person has previously read papers by Vannevar Bush and corresponded by email with Susan Bush, thus results matching those items are given higher priority. As can be appreciated, searches can be modified in a plurality of different manners given data stored and processed by the user model 120 which is described in more detail below with respect to Fig. 2.

Referring to Fig. 2, a user model 200 is illustrated in accordance with an aspect of the present invention. The user model 200 is employed to differentiate personalized searches from generalized searches. One aspect in successful personalization is to build a model of the user that accurately reflects their interests and is easy to maintain and adapt to changes regarding long-term and short-term interests. The user model can be obtained from a variety of sources, including but not limited to:

1) From a rich history of computing context at 210 which can be obtained from local, mobile, or remote sources (*e.g.*, applications open, content of those applications, and detailed history of such interactions including locations).
2) From a rich index of content previously encountered at 220 (*e.g.*, documents, web pages, email, Instant Messages, notes, calendar appointments, and so forth).
3) From monitoring client interactions at 230 including recent or frequent contacts, topics of interest derived from keywords, relationships in an organizational chart, appointments, and so forth.
4) From a history or log of previous web pages or local/remote data sites visited including a history of previous search queries at 240.
5) From profile of user interests at 250 which can be specified explicitly or implicitly derived via background monitoring.
6) From demographic information at 260 (*e.g.,* location, gender, age, background, job category, and so forth).

From the above examples, it can be appreciated that the user model 200 can be based on many different sources of information. For instance, the model 200 can be sourced from a history or log of locations visited by a user over time, as monitored by devices such as the Global Positioning System (GPS). When monitoring with a GPS, raw spatial information can be converted into textual city names, and zip codes. The raw spatial information can be converted into textual city names, and zip codes for positions a user has paused or dwelled or incurred a loss of GPS signal, for example. The locations that the user has paused or dwelled or incurred a loss of GPS signal can identified and converted via a database of businesses and points of interest into textual labels. Other factors include logging the time of day or day of week to determine locations and points of interest.

In other aspects of the subject invention, components can be provided to manipulate parameters for controlling how a user's corpus of information, appointments, views of documents or files, activities, or locations can be grouped into subsets or weighted differentially in matching procedures for personalization based on type, age, or other combinations. For example, a retrieval algorithm could be limited to those aspects of the user's corpus that pertain to the query (*e.g.*, documents that contain the query term). Similarly, email may be analyzed from the previous 1 month, whereas web accesses from the previous 3 days, and the user's content created within the last year. It may be desirable that GPS location information is used from only today or other time period. The parameters can be manipulated automatically to create subsets (*e.g.*, via an optimization process that varies parameters and tests response from user or system) or users can vary one or more of these parameters via a user interface, wherein such settings can be a function of the nature of the query, the time of day, day of week, or other contextual or activity-based observations.

Models can be derived for individuals or groups of individuals at 270 such as via collaborative filtering (described below) techniques that develop profiles by the analysis of similarities among individuals or groups of individuals. Similarity computations can be based on the content and/or usage of items. It is noted that modeling infrastructure and associated processing can reside on client, multiple clients, one or more servers, or combinations of servers and clients.

At 280, machine learning techniques can be applied to learn user characteristics and interests over time. The learning models can include substantially any type of system such as statistical/mathematical models and processes for modeling users and determining preferences and interests including the use of Bayesian learning, which can generate Bayesian dependency models, such as Bayesian networks, naive Bayesian classifiers, and/or other statistical classification methodology, including Support Vector Machines (SVMs), for example. Other types of models or systems can include neural networks and Hidden Markov Models, for example. Although elaborate reasoning models can be employed in accordance with the present invention, it is to be appreciated that other approaches can also utilized. For example, rather than a more thorough probabilistic approach, deterministic assumptions can also be employed (*e.g.*, no recent searching for $X$ amount of time of a particular web site may imply by rule that user is no longer interested in the respective information). Thus, in addition to reasoning under uncertainty, logical decisions can also be made regarding the status, location, context, interests, focus, and so forth of the users.

The learning models can be trained from a user event data store (not shown) that collects or aggregates data from a plurality of different data sources. Such sources can include various data acquisition components that record or log user event data (*e.g.*, cell phone, acoustical activity recorded by microphone, Global Positioning System (GPS), electronic calendar, vision monitoring equipment, desktop activity, web site interaction and so forth). It is noted that the system 100 can be implemented in substantially any manner that supports personalized query and results processing. For example, the system could be implemented as a server, a server farm, within client application(s), or more generalized to include a web service(s) or other automated application(s) that interact with search functions such as the user interface 150 and search engines 180.

Before proceeding, collaborative filter techniques applied at 270 of the user model 200 are described in more detail. These techniques can include employment of collaborative filters to analyze data and determine profiles for the user. Collaborative filtering systems generally use a centralized database about user preferences to predict additional topics users may desire. In accordance with the present invention, collaborative filtering is applied with the user model 200 to process previous user activities from a group of users that may indicate preferences for a given user that predict likely or possible profiles for new users of a system. Several algorithms including techniques based on correlation coefficients, vector-based similarity calculations, and statistical Bayesian methods can be employed.

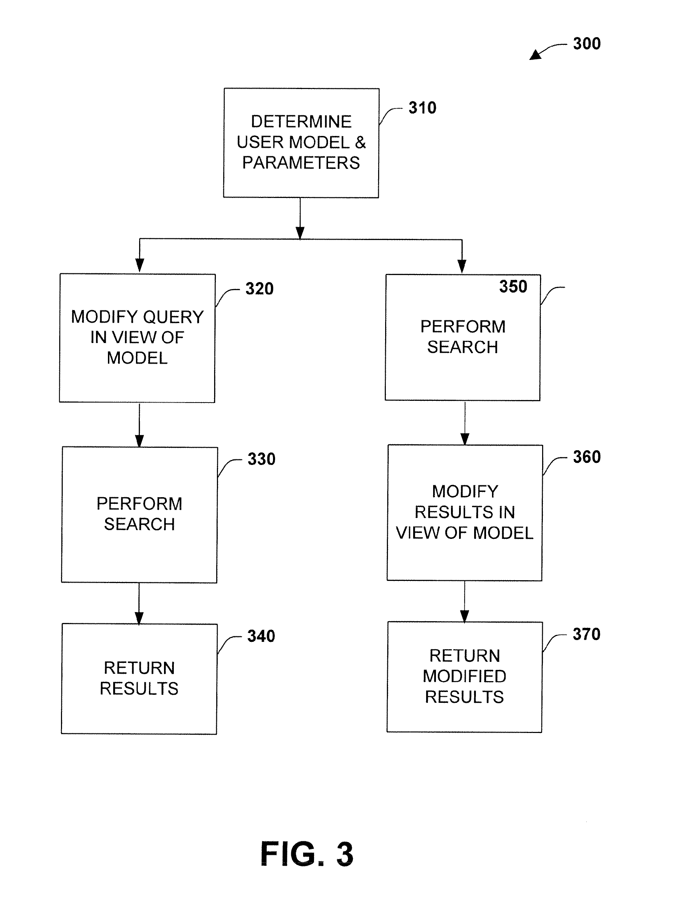

Fig. 3 illustrates an information retrieval methodology 300 in accordance the present invention. While, for purposes of simplicity of explanation, the methodology is shown and described as a series of acts, it is to be understood and appreciated that the present invention is not limited by the order of acts, as some acts may, in accordance with the present invention, occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the present invention.

Explicit or implicitly harvested information about a user's interests can be employed in a variety of ways, and in a query-specific manner, wherein numerous classes of algorithms can be applied. Many of the algorithms consider a user's personal content and/or activities and/or query and/or results returned from a search engine, at hand and consider measures or proxies for measures of the statistical relationships between the such content and global content.

The process 300 depicts two basic paths that can be taken, however, as noted above a combination of query-based modifications or results-based modifications can be applied for personalizing retrieved information. At 310, one or more user models are determined as previously described above with respect to Fig. 2. At 320, a user query is modified in view of the model determined at 310. This can include automatically refining or narrowing the query to terms that are related to interests of the user as determined by the model. At 330, a search is performed by the modified query by submitting the modified query to one or more search engines, wherein results from the modified query are returned at 340.

In the other branch of the process 300, a search is performed by submitting a user's query to one or more search engines at 350. The returned results are then modified at 360 in view of the user model. This can include filtering or reordering results based upon the likelihood that some results are more in line with the user's preferences for desired search information. At 370, the modified results are presented to the user via a user interface display.

The following discussion describes one particular example of a Personalized Search system that has been prototyped. Then user model can include an index of all the items a user has previously seen, including email, documents, web pages, calendar appointments, notes, calendar appointments, instant messages, blogs, and so forth. Items are tagged with metadata (*e.g.*, time of access/creation/modification, type of item, author of item, *etc.*), which can be used to selectively include/exclude items for developing the user model. In this case, the user model resides on a client machine, wherein the user model is accessed from data storage within the client machine upon utilization of a search engine.

Since the user model typically runs on the client's machine, unless the client machine has a local index of the corpora being searched over, corpus-wide term statistics for re-ranking can be difficult or slow to compute. For this reason, in the following example, the corpus statistics are approximated by using the result set.

A Query is directed to a Search Engine (internet or intranet) and Results are returned. The results are modified via the User Model. Modification also occurs on client machine. For each result, compute the similarity of the item with the user's index to identify results that are of more interest to the user. There are several ways to perform such matching such as:

$$\text{Personalized similarity equation } psim = \sum_{t \in terms\_of\_int erest} (tf_t \ / df_t) \cdot pdf_t$$

Personalized similarity is summed over all terms of interest. For each term, the similarity of the result is related to how often the term appears in the result ($tf_t$), inversely related to the number of documents in the corpora being searched in which the term appears ($df_t$), and related to how many documents the term occurs in the user's index ($pdf_t$). Terms of interest can include, terms in the title of the result, terms in the result summary, terms in an extended result summary, terms in the full web page, or some subset of these terms. The number of documents in the corpora in which the term occurs can be approximated using the number of documents in the result set in which the term occurs, where documents are represented by the full text of the document or the result set snippet describing the document.

One implementation identifies terms within a window of two words from each query term in the title or result summary. Generally, all items in the index regardless of type or time are used to compute a personalized similarity measure for each result. The standard similarity of each item is then combined with the personalized similarity for each item. One implementation employs a linear combination of the rank of the item in the original results list with a normalized version of the *psim* score of each item. Other implementations include combining ranks from the original and personalized lists, or scores from the original and personalized lists.

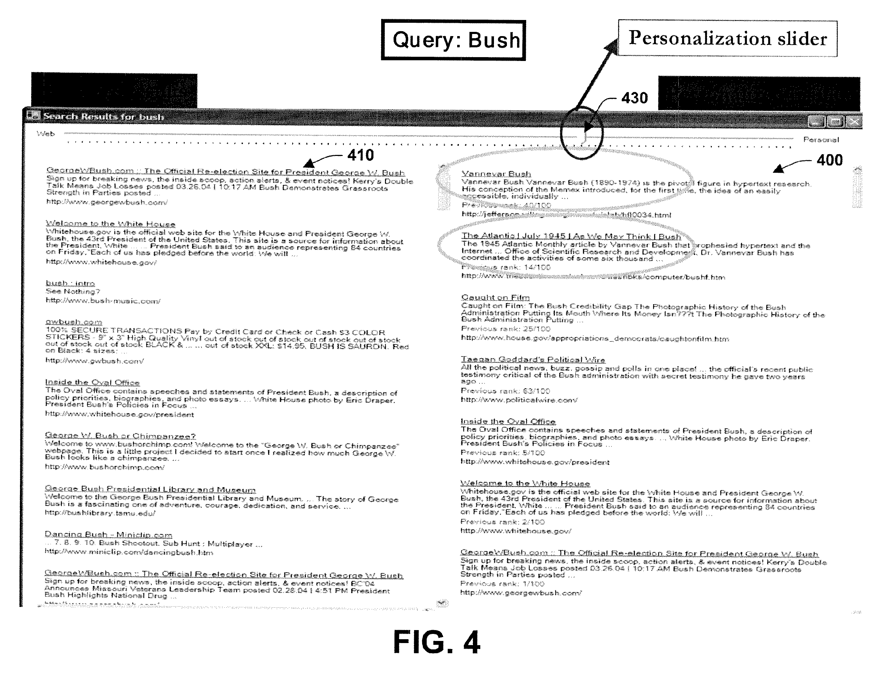

Referring now to Figs. 4-9, example user interfaces for personalized searches are illustrated in accordance with an aspect of the present invention. It is noted that the respective interfaces depicted can be provided in various other different settings and context. As an example, the applications and/or models discussed herein can be associated with a desktop development tool, mail application, calendar application, and/or web browser, for example although other type applications can be utilized. These applications can be associated with a Graphical User Interface (GUI), wherein the GUI provides a display having one or more display objects (not shown) including such aspects as configurable icons, buttons, sliders, input boxes, selection options, menus, tabs and so forth having multiple configurable dimensions, shapes, colors, text, data and sounds to facilitate operations with the applications and/or models. In addition, the GUI and/or models can also include a plurality of other inputs or controls for adjusting and configuring one or more aspects of the present invention and as will be described in more detail below. This can include receiving user commands from a mouse, keyboard, speech input, web site, remote web service, and/or other device such as a camera or video input to affect or modify operations of the GUI and/or models described herein.

Fig. 4 illustrates an interface 400 for presenting personalized results. In this example, the query is "Bush." Standard search results are shown on the left side at 410, and the personalized results shown on the right side at 400. A slider 430 is used to control a function that combines the standard and personal results, ranging from no personalization to full personalization.

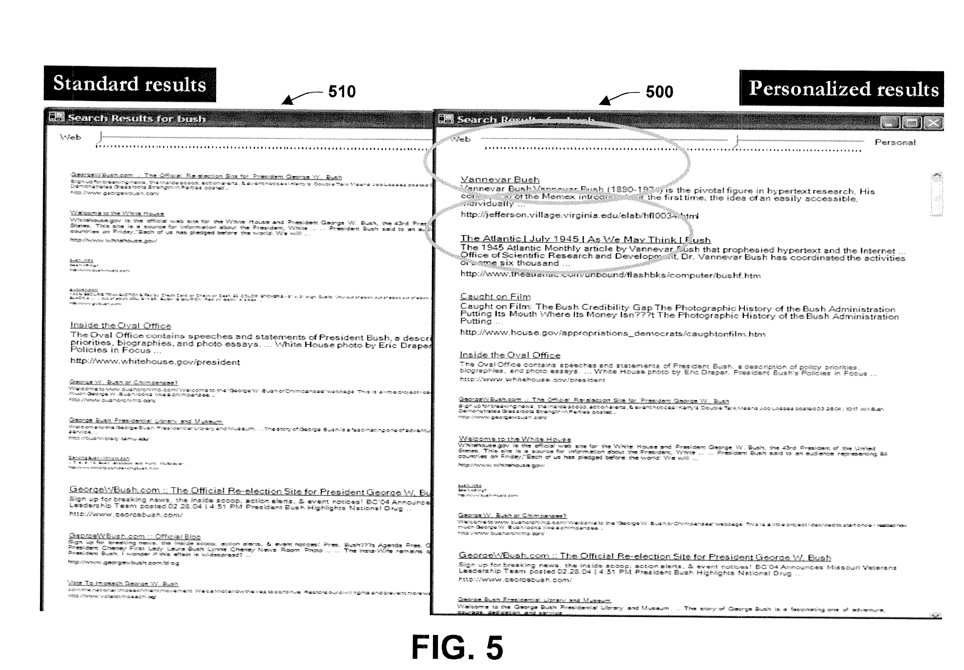

Fig. 5 shows an interface 500 in which results of personal interest are further highlighted by increasing their point size in proportion to their *psim* score; color or other presentation cues could be used as well. Further, terms that contribute substantial weight to the *psim* score could be highlighted within the individual result summaries. The left at 510 shows standard results ordering with size augmentation. The interface at 500 shows a personalized combination again augmented with increased font size for items of personal interest.

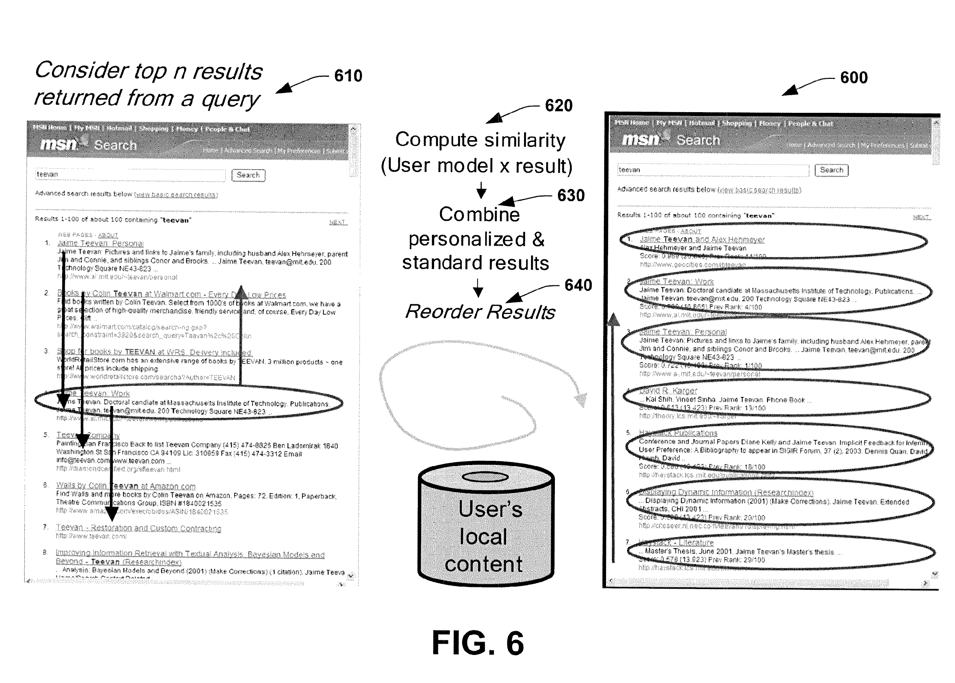

Fig. 6 illustrates the process of providing personalized queries at an interface 600. In this case, the top N results are considered that have been returned from a query at 610. Similarity is computed at 620 in accordance with the user model and the returned results. At 630, personalized and standard results are combined and these results are reordered at 640 where they are displayed as personalized results at 600.

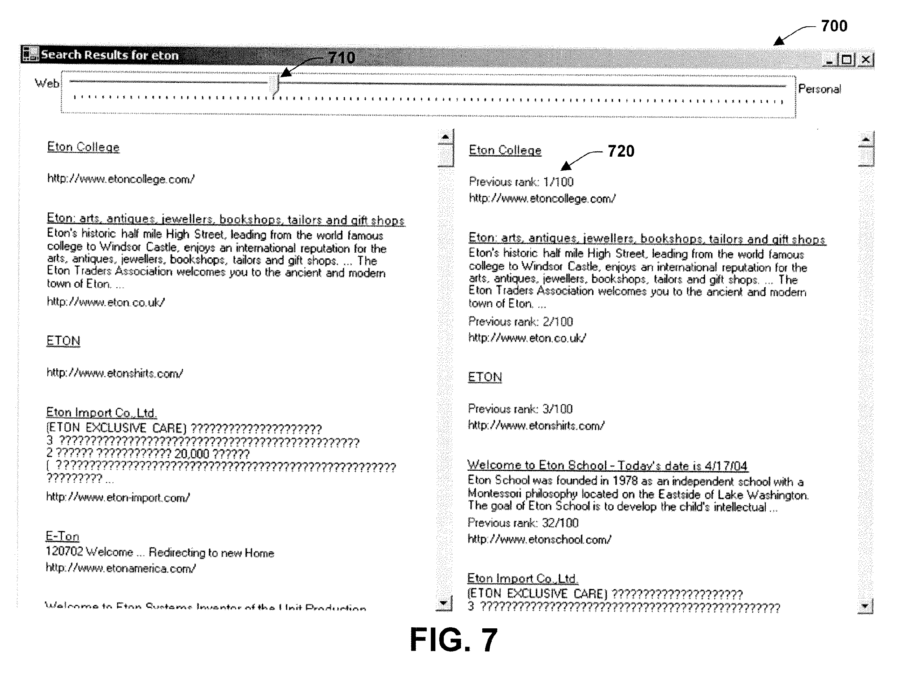

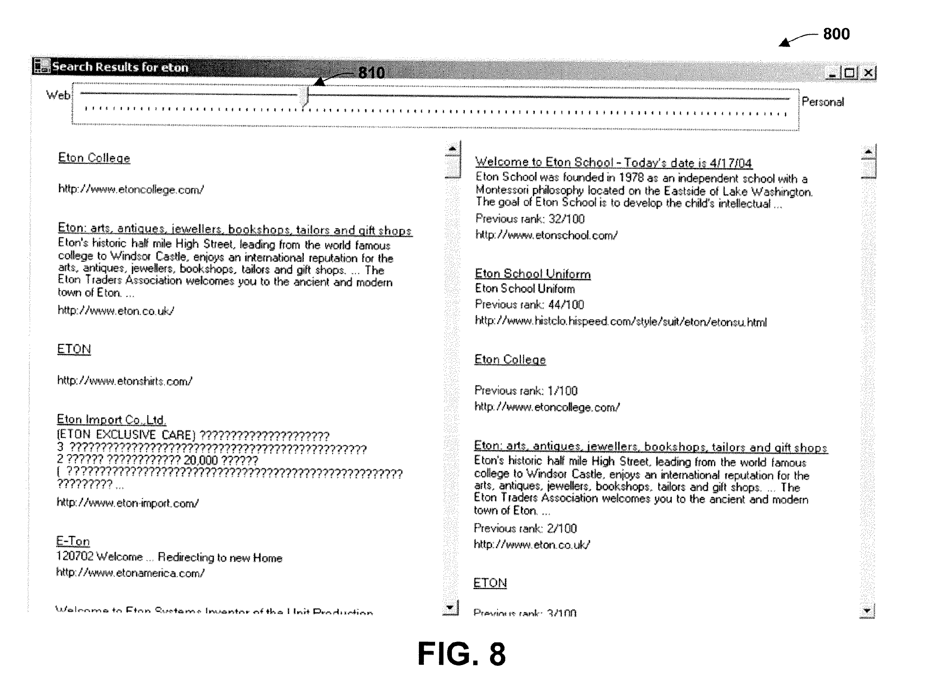

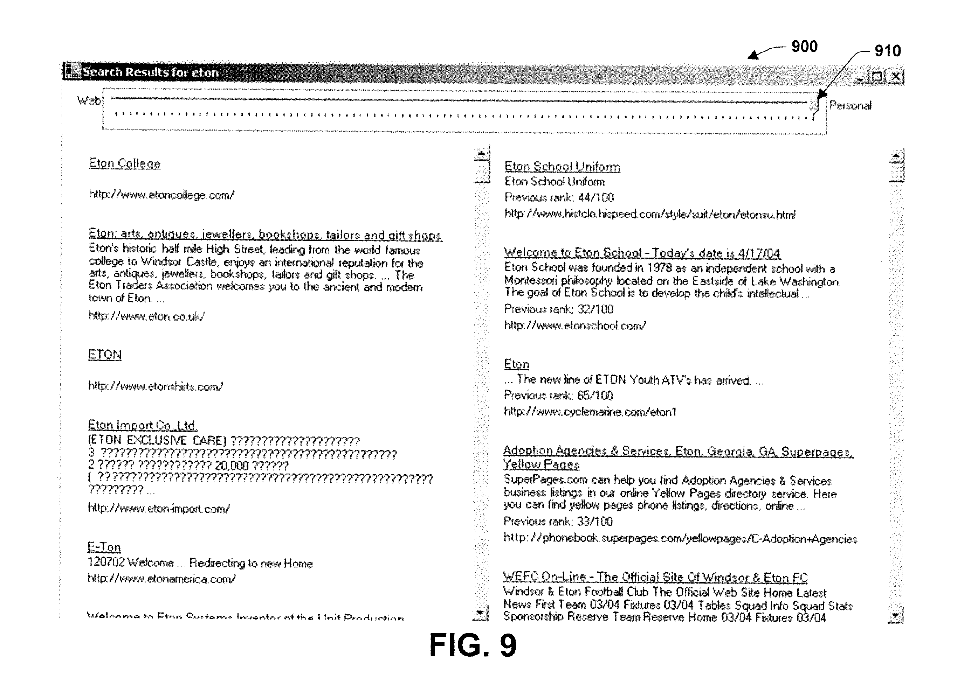

Figs. 7-9 illustrate the effects of the personalization control described above. With respect to Fig. 7, an interface 700 is tuned via a personalization control 710 where the search term "Eton" is employed. A top result for Eton College is ranked as 1/100 at 720. The personalization control 710 is moved to the right and some personalized results appear in the list. The result which appears in position 32 in the standard results list is now shown in position 4. At Fig. 8, a personalization control 810 is moved slightly to the right indicating more personalization for the search. In this case, a top ranking relating to Eton School is generated, wherein Eton School is associated with a personal relative of the user. In this case, the previous rank from Fig. 7 was 32 out of 100. At Fig. 9, the personalization slider is moved to the far right at 910 providing a more personalized ranking of results relating to an Eaton School Uniform posting on the current date.

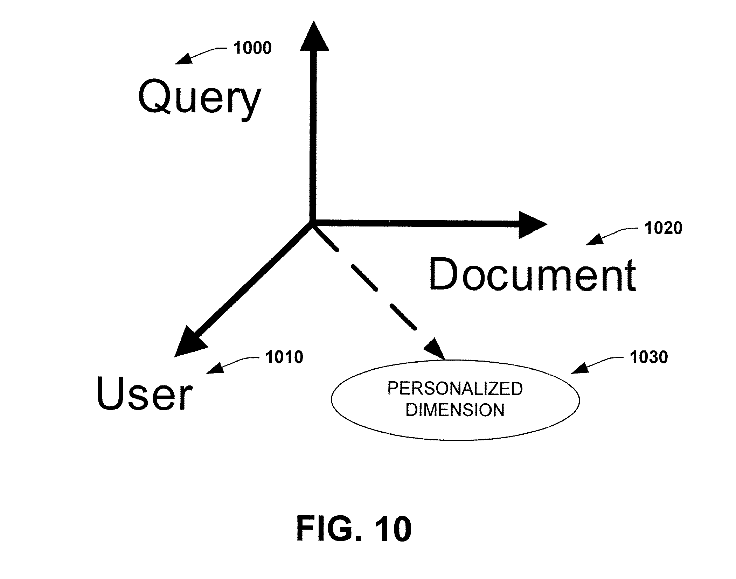

Figs. 10-13 illustrate an example process that can be employed to personalize queries and/or results in accordance with an aspect of the present invention. Fig. 10 shows axes at reference numerals 1000-1020 that depict standard information retrieval dimensions involving a query, a user generating the query, and documents received from such query. In accordance with the present invention, a fourth or personalized dimension 1030 is considered which is based upon a user model to additionally refine, focus, or modify queries and/or results according to personal characteristics or interests of the user.

Such personalized information can be sampled from metadata relating to a plurality of personal information that may be available to a user such as how recently a document has been created, viewed or modified, time stamp information, information that has been stored or previously seen, applications used, logs of web site activities (*e.g.*, sites or topics of interest), context information such as location information or recent activity, e-mail activity, calendar activity, personal interactions such as through electronic communications, demographic information, profile information, similarly situated user information and so forth. These characteristics can be sampled and derived from the user models previously described.

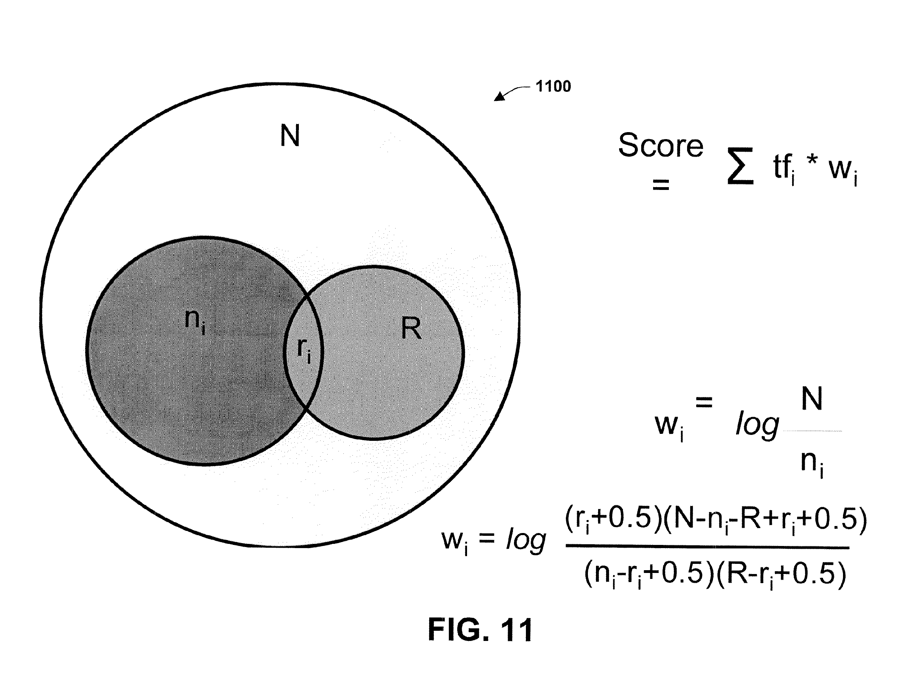

Proceeding to Fig. 11, a Venn diagram 1100 illustrates intersections of search items that are derived from a standard relevance feedback model. An outer circle 1110 depicts $N$ which represents the total number of documents that can be searched. An inner circle $n_i$ represents the number of documents having the terms of a given search. An inner circle R represents documents that are related to relevance feedback determinations, wherein the subsection or overlap between $n_i$ and $R$ represent documents $r_i$ having characteristics of the desired search and are considered relevant by the algorithm. Generally, $R$ is determined from users providing judgments of varying degrees of relevance (*e.g.*, user assigning scores). According to the present invention, $R$ is determined automatically by analyzing the user model previously described to determine relevant areas of interest to the user. Instead of representing the entire document space, both $N$ and $R$ can also represent a subset of the document space (*e.g.*, the subset of documents that are relevant to the query, as indicated by the presence of the query terms). Additionally, the corpus statistics, $N$ and $n_i$, can be approximated using the result set, with $N$ being the number of documents in the result set, and $n_i$ being the number of documents having the terms of a given search, with documents represented by the full text of the document or the result set snippet describing the document.

The following equations illustrate a Scoring function that assigns a score to a given document based upon the sum of some subset of the document's terms, where term $i$'s frequency ($tf_i$) in the document is multiplied by a determined weight ($w_i$) indicating the term's rarity. The scoring function can then be employed to personalize results. In this case, a BM25 relevance feedback model was employed but it is to be appreciated that substantially any information retrieval algorithm can be adapted for personalized queries and/or results modifications in accordance with the present invention.

$$\text{Score} = \sum tf_i * w_i$$

$$w_i = log \frac{(r_i+0.5)(N-n_i-R+r_i+0.5)}{(n_i-r_i+0.5)(R-r_i+0.5)}$$

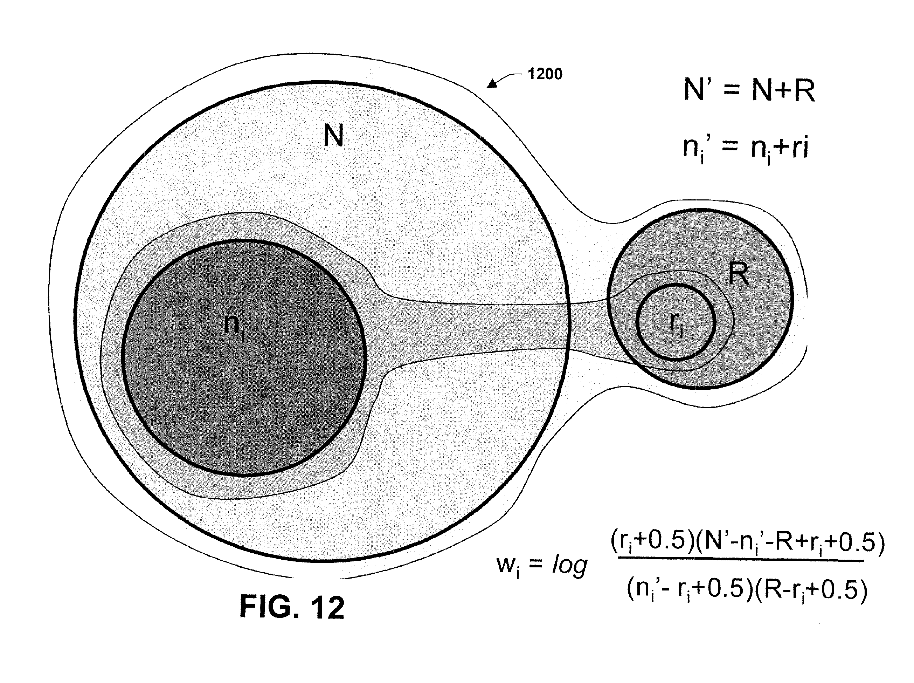

Proceeding to Fig. 12, personalized relevant document information ($R$) is shown as separate from the collection information ($N$) in the Venn diagram 1200. In this case, terms $N'$ and $n_i'$ are introduced to facilitate the separation, wherein $N' = N + R$ and $n_i' = n_i + r_i'$ and $w_i$ is computed as:

$$w_i = log \frac{(r_i+0.5)(N'-n_i'-R+r_i+0.5)}{(n_i'-r_i+0.5)(R-r_i+0.5)}$$

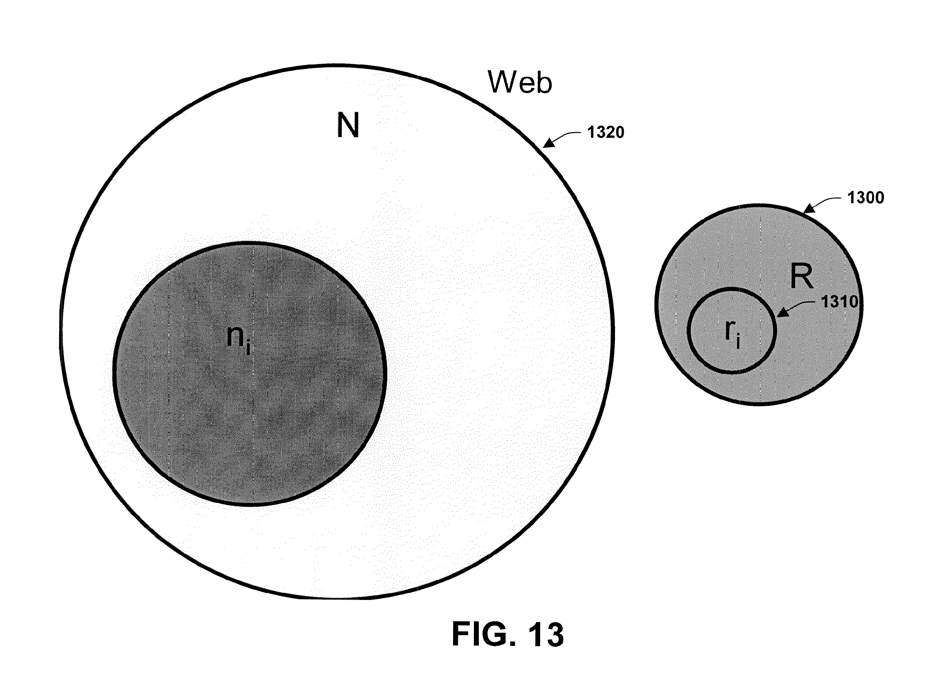

Fig. 13 shows the personalized cluster of data separated at 1300, wherein both personalized items and items matching the search topic are illustrated at 1310. For instance, the circle 1320 could include all documents existing on the web, the documents represented at 1320 could include documents relating to personal data (*e.g.*, documents related to a derived interest in automobiles from the user model), and items at 1310 are those personal documents relating to the search term. As can be appreciated, queries and results can be modified with a plurality of terms or conditions depending on the model and the query of interest.

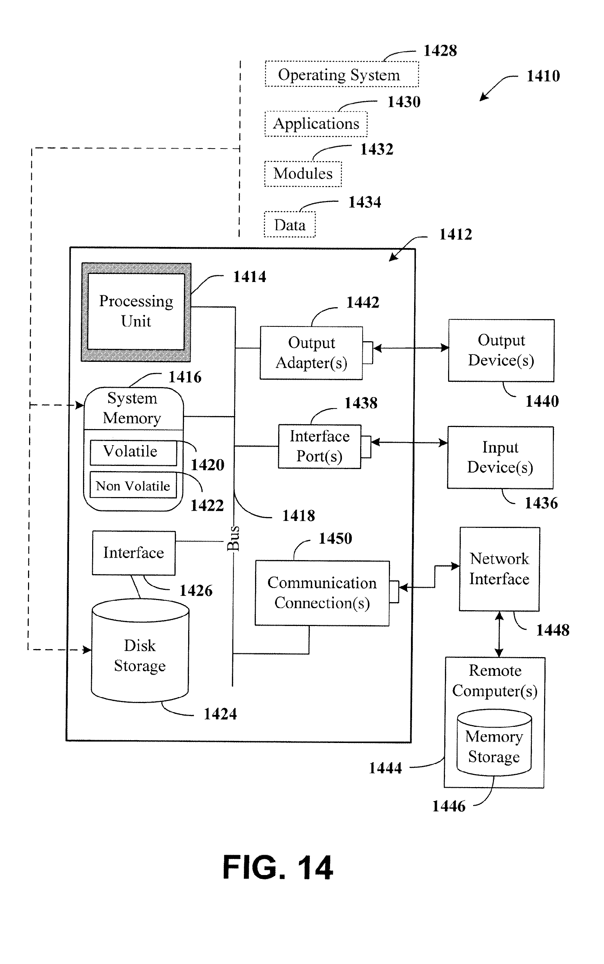

With reference to Fig.14, an exemplary environment 1410 for implementing various aspects of the invention includes a computer 1412. The computer 1412 includes a processing unit 1414, a system memory 1416, and a system bus 1418. The system bus 1418 couples system components including, but not limited to, the system memory 1416 to the processing unit 1414. The processing unit 1414 can be any of various available processors. Dual microprocessors and other multiprocessor architectures also can be employed as the processing unit 1414.

The system bus 1418 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1416 includes volatile memory 1420 and nonvolatile memory 1422. The basic input/output system (BIOS), containing the basic routines to transfer information between elements within the computer 1412, such as during start-up, is stored in nonvolatile memory 1422. By way of illustration, and not limitation, nonvolatile memory 1422 can include read only memory (ROM), programmable ROM (PROM), electrically programmable ROM (EPROM), electrically erasable ROM (EEPROM), or flash memory. Volatile memory 1420 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1412 also includes removable/non-removable, volatile/non-volatile computer storage media. Fig. 14 illustrates, for example a disk storage 1424. Disk storage 1424 includes, but is not limited to, devices like a magnetic disk drive, floppy disk drive, tape drive, Jaz drive, Zip drive, LS-100 drive, flash memory card, or memory stick. In addition, disk storage 1424 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1424 to the system bus 1418, a removable or non-removable interface is typically used such as interface 1426.

It is to be appreciated that Fig 14 describes software that acts as an intermediary between users and the basic computer resources described in suitable operating environment 1410. Such software includes an operating system 1428. Operating system 1428, which can be stored on disk storage 1424, acts to control and allocate resources of the computer system 1412. System applications 1430 take advantage of the management of resources by operating system 1428 through program modules 1432 and program data 1434 stored either in system memory 1416 or on disk storage 1424. It is to be appreciated that the present invention can be implemented with various operating systems or combinations of operating systems.

A user enters commands or information into the computer 1412 through input device(s) 1436. Input devices 1436 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1414 through the system bus 1418 *via* interface port (s) 1438. Interface port(s) 1438 include, for example, a serial port, a parallel port, a game port, and a universal serial bus (USB). Output device(s) 1440 use some of the same type of ports as input device(s) 1436. Thus, for example, a USB port may be used to provide input to computer 1412, and to output information from computer 1412 to an output device 1440. Output adapter 1442 is provided to illustrate that there are some output devices 1440 like monitors, speakers, and printers, among other output devices 1440, that require special adapters. The output adapters 1442 include, by way of illustration and not limitation, video and sound cards that provide a means of connection between the output device 1440 and the system bus 1418. It should be noted that other devices and/or systems of devices provide both input and output capabilities such as remote computer(s) 1444.

Computer 1412 can operate in a networked environment using logical connections to one or more remote computers, such as remote computer(s) 1444. The remote computer(s) 1444 can be a personal computer, a server, a router, a network PC, a workstation, a microprocessor based appliance, a peer device or other common network node and the like, and typically includes many or all of the elements described relative to computer 1412. For purposes of brevity, only a memory storage device 1446 is illustrated with remote computer(s) 1444. Remote computer(s) 1444 is logically connected to computer 1412 through a network interface 1448 and then physically connected *via* communication connection 1450. Network interface 1448 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1450 refers to the hardware/software employed to connect the network interface 1448 to the bus 1418. While communication connection 1450 is shown for illustrative clarity inside computer 1412, it can also be external to computer 1412. The hardware/software necessary for connection to the network interface 1448 includes, for exemplary purposes only, internal and external technologies such as, modems including regular telephone grade modems, cable modems and DSL modems, ISDN adapters, and Ethernet cards.

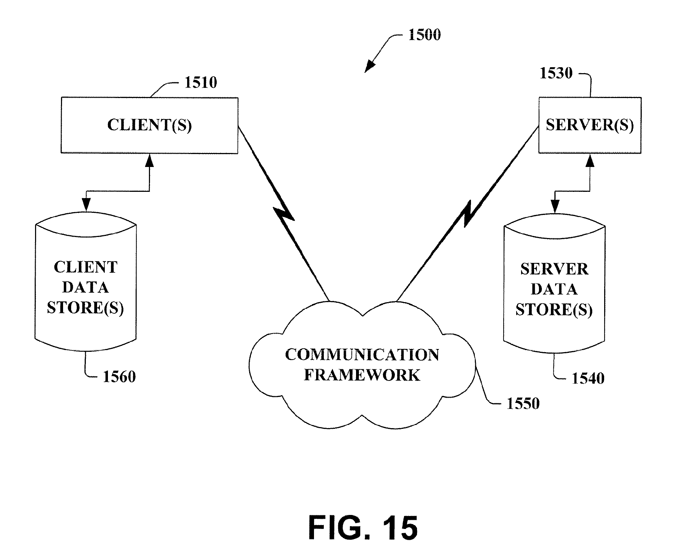

Fig. 15 is a schematic block diagram of a sample-computing environment 1500 with which the present invention can interact. The system 1500 includes one or more client(s) 1510. The client(s) 1510 can be hardware and/or software (*e.g.*, threads, processes, computing devices). The system 1500 also includes one or more server(s) 1530. The server (s) 1530 can also be hardware and/or software (*e.g.*, threads, processes, computing devices). The servers 1530 can house threads to perform transformations by employing the present invention, for example. One possible communication between a client 1510 and a server 1530 may be in the form of a data packet adapted to be transmitted between two or more computer processes. The system 1500 includes a communication framework 1550 that can be employed to facilitate communications between the client(s) 1510 and the server(s) 1530. The client(s) 1510 are operably connected to one or more client data store(s) 1560 that can be employed to store information local to the client(s) 1510. Similarly, the server(s) 1530 are operably connected to one or more server data store(s) 1540 that can be employed to store information local to the servers 1530.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1. A system that facilitates generating personalized searches of information, comprising:

   a user model to determine characteristics of a user;
   a personalization component to automatically modify at least one query component or at least one search result in view of the user model; and
   an interface component to receive the query and display the search result.

2. The system of claim 1, further comprising one or more search engines to receive the query and return the result.

3. The system of claim 1, further comprising a global database of user statistics to facilitate updates to the user model.

4. The system of claim 1, the personalization component employs a query modification processes for an initial input query, modifies or regenerates the query via the user model to yield personalized results from a search engine.

5. The system of claim 4, the personalization component employs relevance feedback, wherein a query generates results that leads to a modified query via explicit or implicit judgments about an initial result set to yield personalized results.

6. The system of claim 1, the personalization component employs results modification utilizing a user's input as-is to generate a query to yield results which are then modified via the user model to generate personalized results.

7. The system of claim 6, the modification of results usually includes re-ranking or selection from a larger set of results alternatives.

8. The system of claim 6, the modification of results includes an agglomeration or summarization of all or a subset of results.

9. The system of claim 1, the personalization component employs a statistical similarity match in which users interests and content are represented as vectors and matched for results modification.

10. The system of claim 9, the personalization component employs category matching in which a user's interests and content are represented using a smaller set of descriptors.

11. The system of claim 1, the personalization component combines query modification or results modification, wherein dependencies are introduced among the two modifications and leveraged.

12. The system of claim 1, the user model is based in part on a history of computing context which can be obtained from local, mobile, or remote sources.

13. The system of claim 12, the computing context includes at least one of applications open, content of the applications, and a detailed history of interactions with the applications.

14. The system of claim 1, the user model is based in part on an index of content previously encountered including at least one of documents, web pages, email, Instant Messages, notes, and calendar appointments.

15. The system of claim 1, the user model is based at least in part on client interactions including at least one of recent or frequent contacts, topics of interest derived from keywords, relationships in an organizational chart, and appointments.

16. The system of claim 1, the user model is based at least in part on a history or log of previous web pages or local/remote data sites visited including a history of previous search queries.

17. The system of claim 1, the user model is based at least in part on a history or log of locations visited by a user over time and monitored by devices that determine information regarding the user's location.

18. The system of claim 17, the devices include a Global Positioning System (GPS) or an electronic calendar to determine the user's location.

19. The system of claim 18, the devices generate spatial information that is converted into textual city names, and zip codes.

20. The system of claim 19, the spatial information is converted into textual city names, and zip codes for locations where a user has paused or dwelled or incurred a loss of GPS signal.

21. The system of claim 20, where the locations that the user has paused or dwelled or incurred a loss of GPS signal are identified and converted via a database of businesses and points of interest into textual labels.

22. The system of claim 21, the locations are determined from the time of day or the day of the week.

23. The system of claim 1, the user model is based at least in part on a profile of user interests which can be specified explicitly or implicitly

24. The system of claim 1, the user model is based at least in part on demographic information including at least one of location, gender, age, background, and job category.

25. The system of claim 1, the user model is based at least in part on at least one of a collaborative filtering and a machine learning algorithm.

26. The system of claim 25, the machine learning algorithm includes at least one of a Bayesian network, a naive Bayesian classifier, a Support Vector Machine, a neural network and a Hidden Markov Model.

27. The system of claim 1, the personalization component provides an adjustment to control personalization of results or queries.

28. A computer readable medium having computer readable instructions stored thereon for implementing the components of claim 1.

29. A client component comprising the system of claim 1.

30. An information retrieval system, comprising:

means for modeling characteristics of a user;
means for querying and displaying results from a search by the user; and
means for modifying the search results based at least in part on the characteristics of the user.

**31.** The system of claim 30, further comprising means for interacting with at least one search engine.

**32.** A method that facilitates information searching at a user interface, comprising:

defining a least one user model that automatically determines parameters of interest for a user;
automatically refining a query or a result from a query based at least in part on the user model; and
automatically formatting the query or the result in view of the user model before displaying modified results to the user.

**33.** The method of claim 32, the user model includes an index of items a user has previously seen, including at least one of email, documents, web pages, calendar appointments, notes, instant messages, and blogs.

**34.** The method of claim 33, further comprising tagging the items with metadata that includes at least one of a time of access or creation or modification, a type of the item, an author of the item which can be employed to selectively include or exclude the items for comparison.

**35.** The method of claim 33, further comprising computing a similarity of the result with a user's index to identify results that are of more interest to the user.

**36.** The method of claim 35, further comprising the following equation to determine similarity:

$$\text{Personalized similarity } psim = \text{SIGMA } (score_t)$$

wherein personalized similarity is summed over all terms of interest, for each term, a similarity of a result is related to a value placed on a term occurrence ($score_t$).

**37.** The method of claim 36, where $score_t = (tf_t/df_t)^*pdf_t$, is related to frequency the term appears in the result ($tf_t$), inversely related to a number of results in which the term appears ($df_t$), and related to how many items the term occurs in a user's index ($pdf_t$).

**38.** The method of claim 36, the terms of interest include at least one of terms in a title of a result, terms in a result summary, terms in an extended result summary, terms in a full web page, a subset of the terms.

**39.** The method of claim 38, further comprising identifying terms within a window of words from each query term in a title or result summary.

**40.** The method of claim 35, further comprising combining a standard similarity of items with a personalized similarity the items.

**41.** The method of claim 40, further comprising employing a linear combination of a rank of the items in an original results list with a normalized version of a personalized similarity score of each item.

**42.** The method of claim 36, further comprising employing a relevance feedback algorithm to determine similarity ($score_t$).

**43.** The method of claim 42, the relevance feedback algorithm is a BM25 algorithm.

**44.** A graphical user interface to perform information retrieval, comprising:

an input component to receive queries;
a display component to show results from queries; and
a personalization component to modify the queries or the results in view of a user model that determines preferences of the user.

**45.** The graphical user interface of claim 44, further comprising a control to refine the queries or the results in terms of a range from standardized searches to personalized searches.

**46.** The graphical user interface of claim 45, the personalized searches are associated with a display having text or color augmentation.

**47.** A system that facilitates generating personalized searches of information, comprising:

    a user model to determine characteristics of a user;
    a personalization component associated with the user model; and
    a parameter component to control a corpus of data for the user model.

**48.** The system of claim 47, the corpus of data is related to user appointments, user views of documents, user activities, or user locations.

**49.** The system of claim 47, the parameter component determines subsets for the corpus of data or determines weighted differentials in matching procedures for data personalization based at least in part on type or age.

**50.** The system of claim 47, the parameter components varies one or more parameters via an optimization process or through instructions provided by a user interface.

**51.** The system of claim 50, the parameters are a function of the nature of a query, a time of day, a day of week, contextual-based observations, or activity-based observations.

FIG. 1

USER MODEL & DATA

| | |
|---|---|
| CONTEXT | 210 |
| RICH INDEX | 220 |
| RICH CLIENT INTERACTIONS | 230 |
| SEARCH HISTORY/LOGS | 240 |
| PROFILE OF INTERESTS | 250 |
| DEMOGRAPHICS | 260 |
| OTHER USERS | 270 |
| MACHINE LEARNING | 280 |

# FIG. 2

300

DETERMINE
USER MODEL &
PARAMETERS
310

MODIFY QUERY
IN VIEW OF
MODEL
320

PERFORM
SEARCH
350

PERFORM
SEARCH
330

MODIFY
RESULTS IN
VIEW OF MODEL
360

RETURN
RESULTS
340

RETURN
MODIFIED
RESULTS
370

# FIG. 3

Query: Bush

Personalization slider

430

Web ............................................................................................ Personal

410

400

**GeorgeWBush.com :: The Official Re-election Site for President George W. Bush**
Sign up for breaking news, the inside scoop, action alerts, & event notices! Kerry's Double Talk Means Job Losses posted 03.26.04 | 10:17 AM Bush Demonstrates Grassroots Strength in Parties posted ...
http://www.georgewbush.com/

**Welcome to the White House**
Whitehouse.gov is the official web site for the White House and President George W. Bush, the 43rd President of the United States. This site is a source for information about the President, White ... ... President Bush said to an audience representing 84 countries on Friday,"Each of us has pledged before the world: We will ...
http://www.whitehouse.gov/

**bush : intro**
See Nothing?
http://www.bush-music.com/

**gwbush.com**
100% SECURE TRANSACTIONS Pay by Credit Card or Check or Cash $3 COLOR STICKERS - 9" x 3" High Quality Vinyl out of stock out of stock out of stock out of stock out of stock out of stock BLACK & ... ... out of stock XXL: $14.95, BUSH IS SAURON. Red on Black: 4 sizes: ...
http://www.gwbush.com/

**Inside the Oval Office**
The Oval Office contains speeches and statements of President Bush, a description of policy priorities, biographies, and photo essays. ... White House photo by Eric Draper. President Bush's Policies in Focus ...
http://www.whitehouse.gov/president

**George W. Bush or Chimpanzee?**
Welcome to www.bushorchimp.com! Welcome to the "George W. Bush or Chimpanzee" webpage. This is a little project I decided to start once I realized how much George W. Bush looks like a chimpanzee. ...
http://www.bushorchimp.com/

**George Bush Presidential Library and Museum**
Welcome to the George Bush Presidential Library and Museum. ... The story of George Bush is a fascinating one of adventure, courage, dedication, and service. ...
http://bushlibrary.tamu.edu/

**Dancing Bush - Miniclip.com**
... 7, 8, 9, 10. Bush Shootout. Sub Hunt : Multiplayer ...
http://www.miniclip.com/dancingbush.htm

**GeorgeWBush.com :: The Official Re-election Site for President George W. Bush**
Sign up for breaking news, the inside scoop, action alerts, & event notices! BC'04 Announces Missouri Veterans Leadership Team posted 02.28.04 | 4:51 PM President Bush Highlights National Drug ...

**Vannevar Bush**
Vannevar Bush Vannevar Bush (1890-1974) is the pivotal figure in hypertext research. His conception of the Memex introduced, for the first time, the idea of an easily accessible, individually ...
Previous rank: 40/100
http://jefferson...h80034.html

**The Atlantic | July 1945 | As We May Think | Bush**
The 1945 Atlantic Monthly article by Vannevar Bush that prophesied hypertext and the Internet ... Office of Scientific Research and Development, Dr. Vannevar Bush has coordinated the activities of some six thousand ...
Previous rank: 14/100
http://www...oks/computer/bushf.htm

**Caught on Film**
Caught on Film: The Bush Credibility Gap The Photographic History of the Bush Administration Putting Its Mouth Where Its Money Isn???t The Photographic History of the Bush Administration Putting ...
Previous rank: 25/100
http://www.house.gov/appropriations_democrats/caughtonfilm.htm

**Taegan Goddard's Political Wire**
All the political news, buzz, gossip and polls in one place! ... the official's recent public testimony critical of the Bush administration with secret testimony he gave two years ago ...
Previous rank: 63/100
http://www.politicalwire.com/

**Inside the Oval Office**
The Oval Office contains speeches and statements of President Bush, a description of policy priorities, biographies, and photo essays. ... White House photo by Eric Draper. President Bush's Policies in Focus ...
Previous rank: 5/100
http://www.whitehouse.gov/president

**Welcome to the White House**
Whitehouse.gov is the official web site for the White House and President George W. Bush, the 43rd President of the United States. This site is a source for information about the President, White ... ... President Bush said to an audience representing 84 countries on Friday,"Each of us has pledged before the world: We will ...
Previous rank: 2/100
http://www.whitehouse.gov/

**GeorgeWBush.com :: The Official Re-election Site for President George W. Bush**
Sign up for breaking news, the inside scoop, action alerts, & event notices! Kerry's Double Talk Means Job Losses posted 03.26.04 | 10:17 AM Bush Demonstrates Grassroots Strength in Parties posted ...
Previous rank: 1/100
http://www.georgewbush.com/

## FIG. 4

Standard results

Personalized results

Search Results for bush

Web

Personal

500

510

Vannevar Bush
Vannevar Bush Vannevar Bush (1890-1974) is the pivotal figure in hypertext research. His conception of the Memex introduced ... the first time, the idea of an easily accessible, individually ...
http://jefferson.village.virginia.edu/elab/hfl0034.html

The Atlantic | July 1945 | As We May Think | Bush
The 1945 Atlantic Monthly article by Vannevar Bush that prophesied hypertext and the Internet ... Office of Scientific Research and Development. Dr. Vannevar Bush has coordinated the activities of some six thousand ...
http://www.theatlantic.com/unbound/flashbks/computer/bushf.htm

Caught on Film
Caught on Film: The Bush Credibility Gap The Photographic History of the Bush Administration Putting Its Mouth Where Its Money Isn??t The Photographic History of the Bush Administration Putting ...
http://www.house.gov/appropriations_democrats/caughtonfilm.htm

Inside the Oval Office
The Oval Office contains speeches and statements of President Bush, a description of policy priorities, biographies, and photo essays. ... White House photo by Eric Draper. President Bush's Policies in Focus ...
http://www.whitehouse.gov/president

Welcome to the White House
...
http://www.whitehouse.gov/

George W. Bush or Chimpanzee?
...

GeorgeWBush.com ... The Official Re-election Site for President George W. Bush
Sign up for breaking news, the inside scoop, action alerts, & event notices! BC-04 Announces Missouri Veterans Leadership Team posted 02.28.04 | 4:51 PM President Bush Highlights National Drug ...
http://www.georgewbush.com/

FIG. 5

FIG. 6

700

Search Results for eton — □ ×

Web | 710 | Personal

Eton College

http://www.etoncollege.com/

Eton: arts, antiques, jewellers, bookshops, tailors and gift shops

Eton's historic half mile High Street, leading from the world famous college to Windsor Castle, enjoys an international reputation for the arts, antiques, jewellers, bookshops, tailors and gift shops. ... The Eton Traders Association welcomes you to the ancient and modern town of Eton. ...

http://www.eton.co.uk/

ETON

http://www.etonshirts.com/

Eton Import Co., Ltd.

(ETON EXCLUSIVE CARE) ?????????????????????
3 ?????????????????????????????????????????????
2 ??????????????????????? 20,000 ?????
( ????????? ?????????????????????????????????
?????????? ...

http://www.eton-import.com/

E-Ton

120702 Welcome ... Redirecting to new Home

http://www.etonamerica.com/

Welcome to Eton Systems Inventor of the Unit Production

---

Eton College — 720

Previous rank: 1/100
http://www.etoncollege.com/

Eton: arts, antiques, jewellers, bookshops, tailors and gift shops

Eton's historic half mile High Street, leading from the world famous college to Windsor Castle, enjoys an international reputation for the arts, antiques, jewellers, bookshops, tailors and gift shops. ... The Eton Traders Association welcomes you to the ancient and modern town of Eton. ...

Previous rank: 2/100
http://www.eton.co.uk/

ETON

Previous rank: 3/100
http://www.etonshirts.com/

Welcome to Eton School – Today's date is 4/17/04

Eton School was founded in 1978 as an independent school with a Montessori philosophy located on the Eastside of Lake Washington. The goal of Eton School is to develop the child's intellectual ...

Previous rank: 32/100
http://www.etonschool.com/

Eton Import Co., Ltd.

(ETON EXCLUSIVE CARE) ??????????????????????????
3 ???????????????????????????????????????????????

**FIG. 7**

**Search Results for eton** — 810

Web ◄═══════════════════════════════════════ Personal

**Eton College**

http://www.etoncollege.com/

**Eton: arts, antiques, jewellers, bookshops, tailors and gift shops**
Eton's historic half mile High Street, leading from the world famous
college to Windsor Castle, enjoys an international reputation for the
arts, antiques, jewellers, bookshops, tailors and gift shops. ... The
Eton Traders Association welcomes you to the ancient and modern
town of Eton. ...

http://www.eton.co.uk/

**ETON**

http://www.etonshirts.com/

**Eton Import Co., Ltd.**
(ETON EXCLUSIVE CARE) ??????????????????????
3 ????????????????????????????????????????????????????
2 ?????? ??????????? 20,000 ??????
( ?????????????????????????????????????????????????????????
????????? ...

http://www.eton-import.com/

**E-Ton**
120702 Welcome ... Redirecting to new Home
http://www.etonamerica.com/

Welcome to Eton Systems Inventor of the Unit Production

**Welcome to Eton School – Today's date is 4/17/04**
Eton School was founded in 1978 as an independent school with a
Montessori philosophy located on the Eastside of Lake Washington.
The goal of Eton School is to develop the child's intellectual ...
Previous rank: 32/100
http://www.etonschool.com/

**Eton School Uniform**
Eton School Uniform
Previous rank: 44/100
http://www.histclo.hispeed.com/style/suit/eton/etonsu.html

**Eton College**

Previous rank: 1/100
http://www.etoncollege.com/

**Eton: arts, antiques, jewellers, bookshops, tailors and gift shops**
Eton's historic half mile High Street, leading from the world famous
college to Windsor Castle, enjoys an international reputation for the
arts, antiques, jewellers, bookshops, tailors and gift shops. ... The
Eton Traders Association welcomes you to the ancient and modern
town of Eton. ...
Previous rank: 2/100
http://www.eton.co.uk/

**ETON**
Previous rank: 3/100

**FIG. 8**

— 800

900 910

Web | Personal

**Eton College**

http://www.etoncollege.com/

**Eton: arts, antiques, jewellers, bookshops, tailors and gift shops**
Eton's historic half mile High Street, leading from the world famous college to Windsor Castle, enjoys an international reputation for the arts, antiques, jewellers, bookshops, tailors and gift shops. ... The Eton Traders Association welcomes you to the ancient and modern town of Eton. ...

http://www.eton.co.uk/

**ETON**

http://www.etonshirts.com/

**Eton Import Co.,Ltd.**
(ETON EXCLUSIVE CARE) ??????????????????????
3 ?????????????????????????????????????????????????
2 ?????? ???????????? 20,000 ??????
( ?????????????????????????????????????????????????????
????????? ...
http://www.eton-import.com/

**E-Ton**
120702 Welcome ... Redirecting to new Home
http://www.etonamerica.com/

Welcome to Eton Systems Inventor of the Unit Production

**Eton School Uniform**
Eton School Uniform
Previous rank: 44/100
http://www.histclo.hispeed.com/style/suit/eton/etonsu.html

**Welcome to Eton School - Today's date is 4/17/04**
Eton School was founded in 1978 as an independent school with a Montessori philosophy located on the Eastside of Lake Washington. The goal of Eton School is to develop the child's intellectual ...
Previous rank: 32/100
http://www.etonschool.com/

**Eton**
... The new line of ETON Youth ATV's has arrived. ...
Previous rank: 65/100
http://www.cyclemarine.com/eton1

**Adoption Agencies & Services, Eton, Georgia, GA, Superpages, Yellow Pages**
SuperPages.com can help you find Adoption Agencies & Services business listings in our online Yellow Pages directory service. Here you can find yellow pages phone listings, directions, online ...
Previous rank: 33/100
http://phonebook.superpages.com/yellowpages/C-Adoption+Agencies

**WEFC On-Line - The Official Site Of Windsor & Eton FC**
Windsor & Eton Football Club The Official Web Site Home Latest News First Team 03/04 Fixtures 03/04 Tables Squad Info Squad Stats Sponsorship Reserve Team Reserve Home 03/04 Fixtures 03/04

**FIG. 9**

FIG. 10

$$\text{Score} = \sum tf_i * w_i$$

$$w_i = log \frac{N}{n_i}$$

$$w_i = log \frac{(r_i+0.5)(N-n_i-R+r_i+0.5)}{(n_i-r_i+0.5)(R-r_i+0.5)}$$

**FIG. 11**

**FIG. 12**

$$N' = N + R$$

$$n_i' = n_i + r_i$$

$$w_i = \log \frac{(r_i + 0.5)(N' - n_i' - R + r_i + 0.5)}{(n_i' - r_i + 0.5)(R - r_i + 0.5)}$$

FIG. 13

**FIG. 14**

**FIG. 15**

**European Patent Office**

## EUROPEAN SEARCH REPORT

Application Number

EP 05 10 8702

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 050 830 A (XEROX CORPORATION) 8 November 2000 (2000-11-08) | 1-51 | G06F17/30 |
| Y | * abstract; claim 1; figure 2 * | 1-51 | |
| X | US 6 473 752 B1 (FLEMING, III HOYT A) 29 October 2002 (2002-10-29) | 1-51 | |
| Y | * abstract; claim 1; figure 2 * | 1-51 | |
| P,X | WO 2005/033979 A (GOOGLE, INC; LAWRENCE, STEPHEN, R) 14 April 2005 (2005-04-14) | 1-51 | |
| P,Y | * abstract; figure 2 * | 1-51 | |
| Y | YOUNG-WOO SEO ET AL ASSOCIATION FOR COMPUTING MACHINERY: "Learning user's preferences by analyzing web-browsing behaviors" PROCEEDINGS OF THE 4TH. ANNUAL CONFERENCE ON AUTONOMOUS AGENTS. BARCELONA, SPAIN, JUNE 3 - 7, 2000, PROCEEDINGS OF THE ANNUAL CONFERENCE ON AUTONOMOUS AGENTS, NEW YORK, NY : ACM, US, vol. CONF. 3, 3 June 2000 (2000-06-03), pages 381-387, XP002197048 ISBN: 1-58113-230-1 * the whole document * | 1-51 | |
| Y | US 6 012 053 A (PANT ET AL) 4 January 2000 (2000-01-04) * abstract; claims 1,2; figures 1-3 * | 1-51 | |
| Y | WO 98/10597 A (RAPAPORT, JEFFREY, ALAN; RAPAPORT, SEYMOUR, ALVIN) 12 March 1998 (1998-03-12) * abstract; claim 1 * | 1-51 | |

TECHNICAL FIELDS SEARCHED (IPC)

G06F

-/--

The present search report has been drawn up for all claims

| Place of search | Date of completion of the search | Examiner |
|---|---|---|
| Munich | 2 February 2006 | May, M |

EPO FORM 1503 03.82 (P04C01)

**European Patent Office**

**EUROPEAN SEARCH REPORT**

Application Number

EP 05 10 8702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 99/67698 A (KONINKLIJKE PHILIPS ELECTRONICS N.V; PHILIPS AB) 29 December 1999 (1999-12-29) * abstract; claim 1 * ----- | 1-51 | |
| Y | BATHIA S K: "Selection of search terms based on user profile" APPLIED COMPUTING: TECHNOLOGICAL CHALLENGES OF THE 1990'S. PROCEEDINGS OF THE ACM/SIGAPP SYMPOSIUM ON APPLIED COMPUTING, 1992, pages 224-233, XP002278871 * the whole document * ----- | 1-51 | |
| Y | US 5 761 662 A (DASAN ET AL) 2 June 1998 (1998-06-02) * abstract; claim 1; figure 4 * ----- | 1-51 | |

TECHNICAL FIELDS SEARCHED (IPC)

The present search report has been drawn up for all claims

| Place of search | Date of completion of the search | Examiner |
|---|---|---|
| Munich | 2 February 2006 | May, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

European Patent

Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 05 10 8702

The Search Division considers that the present European patent application does not comply with the requirements of unity of invention and relates to several inventions or groups of inventions, namely:

```
1. claims: 1-43, 47-51

        System, medium and method for query or search result
        refinement
                        ---

2. claims: 44-46

                        "Graphical User Interface"
                        ---
```

## ANNEX TO THE EUROPEAN SEARCH REPORT
## ON EUROPEAN PATENT APPLICATION NO.

EP 05 10 8702

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2006

| Patent document cited in search report | | Publication date | Patent family member(s) | | Publication date |
|---|---|---|---|---|---|
| EP 1050830 | A | 08-11-2000 | US | 6327590 B1 | 04-12-2001 |
| US 6473752 | B1 | 29-10-2002 | NONE | | |
| WO 2005033979 | A | 14-04-2005 | US | 2005071328 A1 | 31-03-2005 |
| | | | US | 2005222989 A1 | 06-10-2005 |
| | | | US | 2005240580 A1 | 27-10-2005 |
| US 6012053 | A | 04-01-2000 | NONE | | |
| WO 9810597 | A | 12-03-1998 | US | 5890152 A | 30-03-1999 |
| WO 9967698 | A | 29-12-1999 | EP | 1036367 A2 | 20-09-2000 |
| | | | JP | 2002519751 T | 02-07-2002 |
| | | | US | 6256633 B1 | 03-07-2001 |
| US 5761662 | A | 02-06-1998 | DE | 69531599 D1 | 02-10-2003 |
| | | | DE | 69531599 T2 | 24-06-2004 |
| | | | EP | 0718784 A1 | 26-06-1996 |
| | | | JP | 9026970 A | 28-01-1997 |

EPO FORM P0459

For more details about this annex : see Official Journal of the European Patent Office, No. 12/82